Europäisches Patentamt

European Patent Office    (11) Publication number:    **0 040 657**

Office européen des brevets    **A1**

(12)    **EUROPEAN PATENT APPLICATION**

(21) Application number: **80301748.2**    (51) Int. Cl.³: **F 01 N 1/24**

(22) Date of filing: **27.05.80**

(43) Date of publication of application: **02.12.81**
**Bulletin 81/48**

(71) Applicant: **Matthews, Carl, 102, Gloucester Road, London S.W.7 (GB)**
Applicant: **De Recourt Martyn, Elizabeth, 37, Stanhope Gardens, London S.W.1 (GB)**

(72) Inventor: **Matthews, Carl, 102, Gloucester Road, London S.W.7 (GB)**
Inventor: **De Recourt Martyn, Elizabeth, 37, Stanhope Gardens, London S.W.1 (GB)**

(74) Representative: **Myerscough, Philip Boyd et al, J.A.Kemp & Co. 14, South Square Gray's Inn, London, WC1R 5EU (GB)**

(84) Designated Contracting States: **BE DE FR IT NL SE**

(54)    Acoustic energy absorbing device and method, and exhaust systems and air-conditioning or heating ducts containing said device.

(57)    An acoustic energy absorbing device (1), suitable for incorporation in an exhaust system (2) for an internal combustion engine or an air-conditioning or heating duct, comprises a conduit (6) to an inner surface of which is attached an acoustical energy absorption means comprising a plurality of flexible fibre loops (3) fixed at one end to a backing (4) and thereby to the conduit (6), the free ends of the loops (3) extending inwardly and defining a generally regular geometrical surface. In use the loops (3) flex and trail in a fluid stream passing through the conduit and selectively absorb acoustic energy, rather than kinetic energy. The device makes possible efficient absorption of acoustic energy without the generation of back pressure such as is generated in known devices and which can adversely affect the efficiency of an internal combustion engine.

- 1 -

## DESCRIPTION

"ACOUSTIC ENERGY ABSORBING DEVICE AND METHOD, AND EXHAUST SYSTEMS AND AIR-CONDITIONING OR HEATING DUCTS CONTAINING SAID DEVICE"

The present invention relates to the selective absorption of acoustic energy from kinetic energy under conditions of relative motion between a surface and a fluid.

More particularly the invention provides a device for absorbing acoustic energy from a fluid stream, such as a gas, which device includes a surface past which the fluid stream can flow, preferably with minimal loss of kinetic energy due to surface resistance. The surface is provided with a plurality of loops of fibers or filaments of a relatively small diameter, each loop having one of its portions or zones operatively attached to a backing material which, in turn, is attached, either directly or indirectly, to a conduit surface and its other portion or zone extending freely into the fluid stream.

The present invention, in its method aspect, provides a method of absorbing acoustic energy from a moving fluid stream, usually a gas, by passing the fluid stream over and in contact with at least one surface carrying a multiplicity of loops of fibers or filaments of a relatively small diameter, as described above. The moving fluid stream impinges upon the free ends of the loops and the loops serve to absorb acoustic energy.

The device of the invention is particularly useful, for example, in an exhaust system for an internal combustion engine such as that of a motor vehicle, marine craft or aircraft, and specifically as a replacement for a conventional automotive muffler or silencer.

0040657

The device of the invention can also be used as a portion of an air-conditioning or heating duct which may be of any desired cross-sectional shape, for example oval, square or circular. The air passing through such a duct is able to flow with only minimal or no loss of kinetic energy due to surface resistance, while at the same time the flexing fibers or filaments serve to silence or muffle the airflow.

The device of the present invention may also be useful as an integument applied to an external face of a solid in order to absorb acoustic radiation from the solid.

According to the present invention the fiber loops are flexible, so that in use their free portions can extend parallel to and trail in the flowing fluid.

The loops may be of inorganic, metal-organic or any suitable material provided that the fibers possess physical and chemical properties appropriate for their integrity and survival for an acceptable period of use in the environment in which they are placed. The fibers preferably are part of a continuous loop substrate such as continuous loop pile carpeting made from glass fibers which is commercially available. End uses for devices containing such materials are primarily the auto, aircraft and similar internal combustion engines. Devices of the present invention are also applicable to marine craft in which the exhaust gas is cooled, typically by water injection. The fibers in this instance may be of organic origin, such as polyacrylonitrile or the like. In any event the fibers forming the loops should preferably be of a suitable material of refractory and insoluble nature. Selection of an appropriate fiber is conveniently determined through preliminary experimentation by one skilled in the art. It is preferred that the fibers or filaments have an average diameter of 1 to 50 microns.

The fiber loops should be sufficiently close together that their free ends define a substantially regular geometrical surface beyond which there is no obstruction, or relatively little obstruction, to the passage of the fluid. Since this geometrical surface is flexible and of low reflectivity, the acoustic energy present in the fluid is readily transmitted through it and absorbed by the mass of fibers between it and the outer casing. The fiber loops at least initially extend normal to the surface to which their fixed end portions are attached, although over a period of use the loops may become bent or curved in the direction of the fluid flow.

The device of the invention will now be described in more detail by reference to the accompanying drawings in which:

Figure 1 is a top view partial representation of an automobile showing a suggested positioning of a muffler contaning a device of the present invention; and

Figure 2 is a top view in partial transverse section of the muffler of Figure 1.

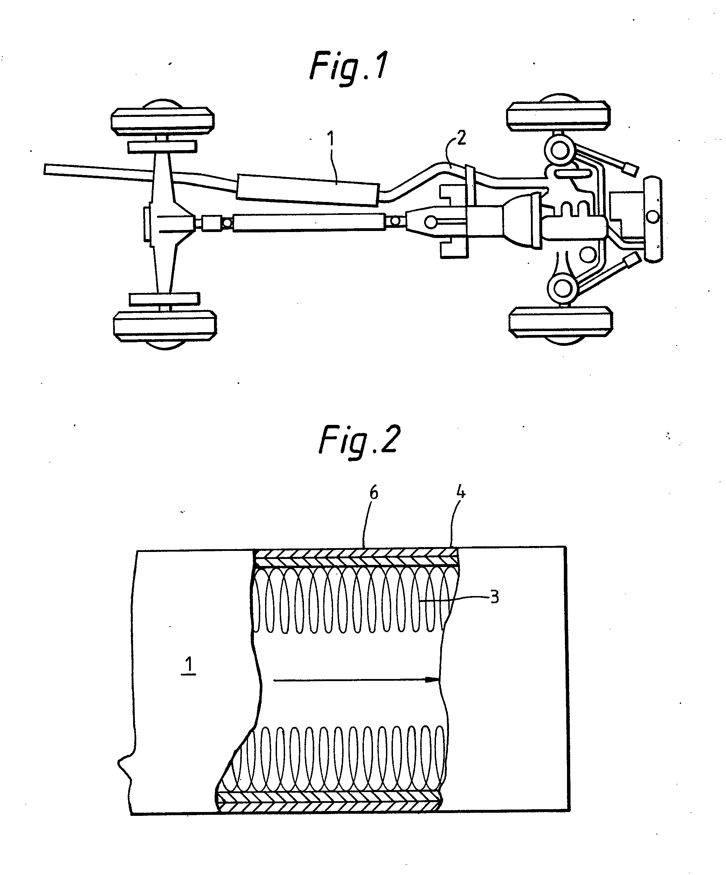

Referring to Figure 1 an invested silencer pipe or muffler 1 may be situated anywhere along the exhaust line 2. The muffler may, if necessary, comprise more than one invested section. Although this figure shows muffler 1 as being of greater external diameter than exhaust pipe 2, the extension of this enlargement has been (for purposes of illustration) magnified. It is important that the internal annular space in muffler 1 should not be less than the average diameter of the exhaust line 2. In this way no constriction is built into the exhaust line and no additional back pressure is created.

Figure 2 is partially broken away view of muffler 1 in which a continuous loop pile investment 3 woven into a suitable backing 4 is bonded directly to the wall of the muffler 6. The backing 4 may be bonded chemically to the wall as with a suitable adhesive or form an intricate part of the muffler wall 6, in which case the bonding is mechanical. Also the continuous loop pile may comprise the backing into which the fiber is woven and at the same time form that part of the silencer pipe 1 which is invested in the exhaust line 2.

In Figure 2 the interior wall of conduit 6, shown in axial or transverse section, is provided with an investment of flexible, uni-directional, closely spaced fiber loops 3. The free end portions of the majority of the fiber loops, after rising from the backing 4 to which they are fixed at least initially extend normal to the backing, assuming positions in which they defihe a geometrical surface substantially parallel to the direction of fluid flow.

When the construction of the present invention is used in an automobile engine exhaust system, it has been found that the acoustic energy present in the gas can be absorbed to a very high degree without incurring any substantial decrease in the kinetic energy of the gas.

This device then provides an exahust which can be totally silent with minimal back pressure, or, at high velocities of flow, pressure of such low value that the engine maintains higher efficiency than is normally the case. This is an important feature of the present invention. A conventional automobile muffler reduces the noise made by the auto engine using a series of baffle plates, packings and walls inside of the muffler. In reducing noise a substantial amount of back pressure is created which decreases the efficiency of the engine. By reducing back pressure the overall operating efficiency and economy of the engine are improved.

While we have not fully elaborated the theory of operation of our invention, a reasonable explanation

- 5 -

appears to be that alternating compression/depression
waves of acoustic energy of both longitudinal and
transverse propagation are absorbed by reason of the
multiplicity of phase changes and this energy is
apparently transformed into heat.  Also a high
viscosity is provided in the closely spaced fiber loops by
the very great number of air columns of minute diameters
which interspace the filaments, such columns being
a factor in the acoustic energy absorption.

Taking an automobile exhaust system as an
exaple, it is preferred that the free end portion of
the fiber loops define an opening of about the same
cross-sectional area as that of the bore of an incoming
exhaust line.  To allow the exhaust gases to flow without
resistance, the minimum cross-sectional area normally
required is maintained as an empty space in the fiber
loop field, and the annular space between the empty space
and the backing at or near the outer casing is occupied
by the fiber loops, as described.

The loop backing may be mechanically or
adhesively attached to the conduit interior surface.
When so attached an adhesive will be
selected to be compatible with the backing and capable
of maintaining its integrity during conditions of
operation.  The backing may be supported, or additionally
supported, at intervals by a solid keeper which exerts a
retaining pressure on the investment from the fluid face,
such retainer having a small cross-sectional dimension.
An example of this is an arrangement of small diameter
rods or a spiral of rod or wire so introduced that the
rod or wire becomes substantially buried in the backing,
or it may be attached to the backing by sewing, stapling
or other means.

The keeper may even be, for example, a gauze or
mesh having a very high percentage of open area. Clearly the greater the total area of such solid and rigid keeper material which is not well buried in the investment, the less the acoustic absorbent efficiency of the investment will be.

In the event the keeper or retainer is inadvertently exposed to the sound waves present in the fluid, it is possible to arrange, in the case of a spiral rod for example, that the pitch or wave length is an aliquant of the total length of uninterrupted pipe section. An aliquot part could conceivably give rise to harmonics of certain frequencies. The leading edge of the investment may be protected from attack by the fluid or gas by insert of a short collett, usually of metal, having one end swaged.

According to the various embodiments·of the devices of the invention the fiber loops may extend perpendicularly from the internal wall of the conduit and remain so over the whole of their length. With this arrangement, in use, the fluid flow may cause the fiber loops to bend over at some distance from their point of attachment. So as to provide the optimum or most economical use of materials, a ratio will be established involving several factors such as the amount of incident energy and the statistical data relating to the fiber loops, population per unit area, density or specific gravity, Young's modulus, diameter, and length, particularly that part of the fiber loop investment which is parallel to the direction of fluid flow, effective thickness or depth from the roots when in use, environment humidity, and the length of axial path invested with the fibers.

We have also found that a gas may be released silently yet at high velocity from the end of a conduit such as a compressed air line. For related physical reasons, organ piping is eliminated without reduction of rheological efficiency.

The invention is not to be considered limited in any way to the silencing of an internal combustion engine as there are diverse areas in which the principles set forth above also apply. Other areas in acoustics where the devices of the invention may be used are those where high noise level impulse waves are produced; the absorbent effect of the investment considerably chops down the initial oscilloscope deflection.

Throughout the above discussion, illustrations, and examples, the unidirection of the loops of fiber and filaments, or at least a majority of them, and consequently minimal reduction in kinetic energy, has been the theme. Paradoxically, the reverse may apply in certain cases. An example of this is that in some marine engine exhausts it is not only preferable, but vitally important to prevent any sea water returning under the force of a heavy wave back up to the engine. Clearly, the investment devices and procedures of our invention produce a resistance to such return flow.

## C L A I M S

1.      An acoustic energy absorbing device (1) comprising a conduit (6) having an interior surface, means for absorbing acoustic energy from fluid flowing through said conduit without providing substantial surface resistance to the fluid flow, said means comprising a plurality of flexible fiber loops (3) each such loop having a fixed end thereof operatively attached to a backing (4) and, in turn to at least a portion of said conduit interior surface, and having a free end portion thereof extending inwardly from the conduit interior surface defining a generally regular geometrical surface therein providing an unobstructed fluid flow passage within said conduit (6).

2.      A device according to claim 1 wherein said fibers have an average diameter of 1 to 50 microns.

3.      A device according to claim 1 or 2 wherein said fiber loops (3) are of glass.

4.      A device according to claim 1, 2 or 3 wherein said fiber free end portions define a geometrical surface extending generally parallel to, and in the direction of, the direction of fluid flow in said conduit .(6).

5.      A device according to any one of the preceding claims wherein said conduit (6) has a circular cross-section and wherein said geometrical surface is circular in cross-section and generally concentric with said conduit (6).

6.      A device according to any one of the preceding claims further comprising means for retaining said backing (4) in place in operative attachment to said conduit interior surface, said means comprising a spiral coil of wire or wire mesh.

7.      An exhaust system (2) for an internal combustion engine containing an acoustic energy absorbing device (1) as claimed in any one of claims 1 to 6.

8.      An air-conditioning duct containing an acoustic
energy absorbing device (1) as claimed in any one of claims
1 to 6.

9.      A heating duct containing an acoustic energy
absorbing device (1) as claimed in any one of claims 1 to 6.

10·     A method of absorbing acoustic energy from a
moving fluid stream, said method comprising:

        providing a conduit (6) having an interior surface,
        providing means for absorbing acoustic energy
        from a fluid stream and,
        flowing said fluid stream through said conduit (6)
        without causing substantial surface resistance
        to the fluid flow, said means comprising a
        plurality of flexible fiber loops (3), each such loop
        having a fixed end thereof operatively attached
        to a backing (4) and, in turn at least a portion of
        said conduit interior surface, and having a free
        end portion thereof extending inwardly from the
        conduit interior surface while capable of flexing
        and trailing in the fluid stream, said free end
        portions defining a generally regular geometrical
        surface therein providing an unobstructed fluid
        flow passage within said conduit (6).

///

Fig.1

Fig.2

## European Patent Office

## EUROPEAN SEARCH REPORT

| | DOCUMENTS CONSIDERED TO·BE RELEVANT | | CLASSIFICATION OF THE APPLICATION (Int. Cl.3) |
|---|---|---|---|
| Category | Citation of document with indication, where appropriate, of relevant passages | Relevant to claim | |
| X | GB - A - 2 020 741 (G.V. ERIKSSON) <br> * page 2, lines 109 to 118; fig. 4 * <br> & DE - A1 - 2 916 873 <br> -- | 1,4, <br> 5,10 | F 01 N  1/24 |
| | US - A - 3 954 031 (M.E. TULL et al.) <br> * column 2, lines 37 to 42 * <br> -- | 1,6, <br> 10 | |
| | CH - A - 199 873 (A. KÜRTH) <br> * claims * <br> -- | 3 | |
| | ·GB - A - 1 312 416 (VICTA LTD.) <br> * page 2, lines 79 to 85 * <br> -- | 3 | **TECHNICAL FIELDS SEARCHED (Int. Cl.3)** <br><br> B 23 B  13/00 <br> B 23 Q  11/00 |
| A | DE  - U - 1 697 581 (W. SCHMID) <br> * whole document * <br> -- | | E 04 F  13/00 <br> F 01 N  1/00 <br> F 01 N  7/00 |
| A | "Soviet Inventions Illustrated" <br> Week B 36, 17 October 1979 <br> Section Q. 51 <br> & SU - A - 635272 <br> -- | | G 10 K  11/00 |
| A | US - A - 3 920 872 (J.C. OLLINGER) <br> * abstract; fig. II * <br> -- | | **CATEGORY OF CITED DOCUMENTS** |
| A | US - A - 2 073 951 (N.H. SERVAIS) <br> * whole document * <br> ---- | | X: particularly relevant <br> A: technological background <br> O: non-written disclosure  . <br> P: intermediate document <br> T: theory or principle underlying the invention <br> E: conflicting application <br> D: document cited in the application <br> L: citation for other reasons |

| | The present search report has been drawn up for all claims | | |
|---|---|---|---|
| Place of search <br> Berlin | Date of completion of the search <br> 22-01-1981 | Examiner <br> STÖCKLE | |

EPO Form 1503.1  06.78 ·